Europäisches Patentamt

European Patent Office

Office européen des brevets

(19)

(11) Publication number: **0 066 577**
**B1**

# EUROPEAN PATENT SPECIFICATION

(45) Date of publication of patent specification: **01.08.84**

(21) Application number: **81903212.9**

(22) Date of filing: **08.12.81**

(86) International application number:
**PCT/SE81/00362**

(87) International publication number:
**WO 82/02134 24.06.82 Gazette 82/16**

(51) Int. Cl.³: **H 04 M 19/02,**
**H 02 M 7/42, H 02 P 13/18**

(54) **PULSE WITH MODULATED VOLTAGE CONVERTER FOR GENERATING A PREFERABLY SINUSOIDAL ALTERNATING VOLTAGE.**

(30) Priority: **09.12.80 SE 8008633**

(43) Date of publication of application:
**15.12.82 Bulletin 82/50**

(45) Publication of the grant of the patent:
**01.08.84 Bulletin 84/31**

(84) Designated Contracting States:
**DE FR GB NL**

(56) References cited:
**EP - A - 0 013 332**
**US - A - 3 794 906**
**US - A - 4 192 975**

(73) Proprietor: **TELEFONAKTIEBOLAGET L M ERICSSON**
**S-126 25 Stockholm (SE)**

(72) Inventor: **HAULIN, Tord Lennart**
**Hammarbyg 52**
**S-733 24 Uppsala (SE)**

(74) Representative: **Wennerholm, Kristian et al,**
**TELEFONAKTIEBOLAGET L M ERICSSON**
**S-126 25 Stockholm (SE)**

Courier Press, Leamington Spa, England.

## Description

Technical field

The invention relates to a pulse width modulated voltage converter intended primarily for generating a sinusoidal alternating voltage of low frequency, the peak value of the converter output voltage being greater than the supply voltage. The proposed converter is used as a signal generator in telephone exchanges, for example, but it can also be used as a supply voltage source in a line circuit between telephone subscriber and exchange.

Background art

In the subscriber stage of a telephone exchange, a ringing signal generator is usually included which is common to a plurality of telephone subscribers connected to the exchange. Its function is to provide the receiving subscriber with a ringing signal before connecting a call. For its function, the generator shall generate a sinusoidal alternating voltage which can be added or connected in series to a battery voltage (so-called battery offset) in the line circuit in a plurality of modes depending on different market requirements. The ringing voltage amplitude and frequency is also subject to market adjustment from 80 V up to 120 V as well as 17,25 and 50 Hz. The necessary power is about 25 VA for the units and traffic cases normally current.

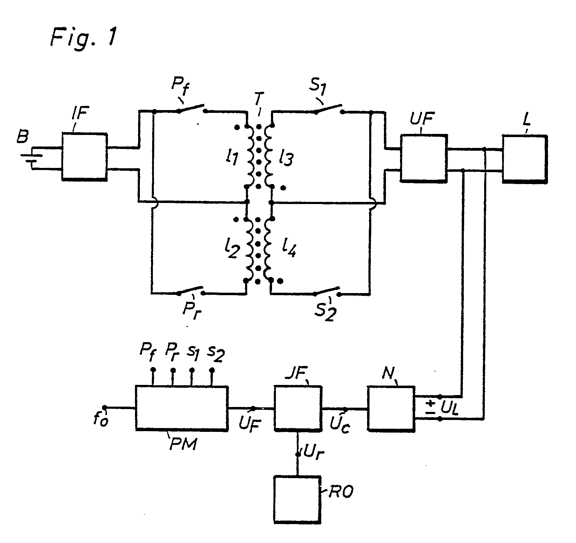

A pulse width modulated converter having some of the features of claim 1 is known from either US—A—3.794.906 or US—A—4.192.975. These known converters comprise a balanced transformer input, in the sense that the high frequency current pulses flow through primary windings in alternate senses, alternating at the high frequency rate. This prevents residual core magnetisation from building up. In Figure 1 of US—A—3.794.906 alternating pulses are produced by bridge-coupled thyristors (Q1, Q3 and Q2, Q4) on the primary side and in conjunction with a center tap of a transformer. Alternating current pulses are induced in the secondary windings. These high-frequency alternating secondary pulses are essentially rectified in one direction to produce an output half cycle of one polarity and in the opposite direction to produce an output half cycle of the opposite polarity. In Figure 1 of US—A—3.794.906 one direction rectification is carried out by one pair of series connected but oppositely poled thyristors (Q5, Q7) and rectification in the other direction by another pair of series connected and opposite poled thyristors (Q6, Q8), both types of rectification being in conjunction with a center tap on the secondary side of the transformer. In the converter of US—A—4.192.975 the secondary switches may additionally be high-frequency pulsed to control output levels by phase regulation.

In the converter of the invention, the direct voltage source sends high-frequency current pulses through the transformer primary winding in only one direction. The transformer needs, therefore, to be designed to tolerate residual magnetisation build up. There is no need for rectification of high-frequency secondary current pulses within each output half cycle as these pulses are unidirectional. There is, of course, the usual current direction switchover between output half cycles. For this, (unlike US—A—3.794.906, but like US—A—4.192.975), use is made of a tapped secondary winding. This is also used for energy feedback in the last part of the output wave half cycles under high resistance high capacitance load conditions. No such control for enabling energy feedback has been described in either document.

Energy feedback is known from EP—A—0 013 332, but this document concerns dc—dc conversion.

Reference may also be made to US—A—4.056.689. This patent inter alia describes a line circuit in which a current supply circuit is included for feeding a telephone line with current independent of the line length. In the line circuit there is included a ringing generator generating a ringing signal when calling a station from a subscriber, as well as a feed voltage source providing the line with direct current when the subscriber lifts his handset.

In the US—A—4.174.467 there is shown in more detail a ringing signal generator for use in a line circuit. This known generator has a power stage comprising four switches conductive in pairs connected in the speech signal path between the exchange and a subscriber. The switches are controlled with a switching frequency very much higher (15 kHz) than the ringing signal frequency (50 Hz) with the aim of reducing disturbing overtones in the ringing signal.

Disclosure of the invention

A problem in the construction of ringing signal generators and supply voltage sources for line circuits is to provide desired voltages and currents with the least possible power consumption. Previously known solutions such as a rotating machine or class C oscillator used as a ringing generator have generally too great weight and too great dimensions. In miniaturization attempts it is above all the LF chokes and transformers which take up the greatest space and have the greatest weight. Furthermore, the power components in linear output stages develop so much heat that they cannot be mounted much closer together in spite of their physical dimensions being small.

The voltage converter in accordance with the present invention contains a transformer which both on the battery and on the load side is connected to switching devices, e.g. transistors. The switching devices are thereby controlled so that the direct voltage coming into the battery side is converted to a sinusoidal output voltage and current, i.e. the output has four-quarter character, whereby the output can be permitted to be loaded with both resistive as well as reactive load. The frequency of the control signals to the switching devices is thereby selected very high in relation to the frequency (e.g. the frequency spectrum) of the desired output voltage, whereby the transformer and the subsequent output filter can be given small dimensions. The four-quarter character of the converter power stage results furthermore in that temporary excess energy in the output filter can be fed back to the direct voltage source, thus attaining some saving of power here also.

The object of the invention is thus to provide a voltage converter for converting DC to AC, which takes up small space and requires low power for the conversion.

The converter in accordance with the invention is as defined in Claim 1.

Brief description of the drawings

The invention will now be described in detail while referring to the appended drawing, where

Fig. 1 is a block and circuit diagram showing the basic features of a voltage converter in accordance with the invention;

Figs. 2a—2d show equivalence diagrams for the converter (power section) according to Fig. 1 during the different switching sequences;

Fig. 3 is a time diagram for more specifically explaining the mode of operation of the converter according to Fig. 1;

Fig. 4 is a time diagram of the currents through two transformer windings in the diagram according to Fig. 1; and

Fig. 5 is a diagram of a possible modulator characteristic of the pulse width modulator included in the converter according to Fig. 1.

Modes for carrying out the invention

The basic features of the voltage converter in accordance with the invention are apparent from Fig. 1. A battery B, which delivers a suitable direct voltage, is connected to an input filter IF. The outputs of the filter IF are connected to the two end points of a first winding $l_1$ of a transformer T. The input filter IF has the task of eliminating the disadvantages occurring when the supply voltage source of the converter does not have sufficiently low impedance at the switching frequency. The filter shall equalize the pulse currents occurring in the converter so that other equipment (connected to the battery B) is not disturbed and so that the converter feed voltage is not appreciably affected by these pulse currents. The transformer T is of conventional implementation with a ferrite core, and contains two windings $l_1$ and $l_2$ on one side (called the primary side below) and two windings $l_3$, $l_4$ on the other side (the secondary side). Via a first switch $P_f$, the winding $l_1$ has its end points connected to the filter output according to the above, and via a second switch

$P_r$ the winding $l_2$ has one end point connected to said output. In a similar manner, the secondary winding half $l_3$ has one end point connected via a third switch $S_1$ to the input of an output filter UF and its other end point directly connected to said input. The fourth winding half $l_4$ has one end point connected to the input of the output filter UF via a fourth switch $S_2$ and has its other end point directly connected to said input. The switches are controllable from the outputs $p_f$, $p_r$, $s_1$ and $s_2$ of a pulse width modulator PM, which will be described in more detail below. The switches $P_f$, $P_r$ and $S_1$, $S_2$ may be bipolar transistors, field effect transistors of the MOS type or bipolar type, depending on the application in question. The switch $P_r$ can also consist solely of a diode, the control pulses $p_r$ from the modulator PM then not being utilized. The winding halves $l_1$—$l_4$ are oriented as indicated by the dot markings in Fig. 1 and the ratio of the number of turns $l_1$—$l_3$, $l_2$—$l_4$ can be selected in a suitable mode depending on the desired output voltage level of the load voltage $U_L$ obtained from the output filter UF. The block L symbolizes a load which in the ringing signal generator application is a so-called ringing bus, i.e. a two-wire line containing a plurality of switches (ringing relays). In the one position of these, the ringing signal generator is connected to a telephone set and gives a ringing signal to it. In the other position (the speech position) the telephone is connected to an exchange and the ringing signal generator is disconnected.

Both terminals of the output filter UF are connected to the input of a feedback network N, apart from to the load L. The output voltage $U_L$ is attenuated to a suitable level in this network for being suited to the subsequent logic circuits. Since the output voltage $U_L$ is floating (it is not related to any reference), suitable relation to a reference potential (earth) also takes place in the network N. The output voltage $U_c$ from the network N according to Fig. 1 is thus related to earth.

A comparator, for example comprising an operation amplifier, is connected by one input to the output of the feedback network N and by its other input to the input signal source of the convertor. In the case of implementation of the ringing signal generator according to Fig. 1, the input signal source is a reference oscillator Ro, sending a sinusoidal reference signal, the frequency of which is equal to that desired to be obtained for the output voltage $U_L$ from the filter UF. In comparing the reference voltage $U_{ref}$ with the output voltage $U_c$ from the network N, there is obtained an error voltage $U_F$ across the output of the comparator JF. This output is connected to the pulse width modulator PM, which sends control signals from two pairs of outputs $p_f$, $p_r$ and $s_1$, $s_2$ to the switches $P_f$, $P_r$ and $S_1$, $S_2$, respectively. In the pulse width modulator PM, the magnitude of the error voltage $U_F$ will determine the pulse-pause relationship (the pulse rate) of the square-wave control signals across the outputs $p_f$, $p_r$ and $s_1$, $s_2$. The pulse rate of these can thus vary from 0 to 100% in response to the error voltage $U_F$, while their frequency is maintained constant, and determined by the frequency $f_0$ of a clock signal. A pulse width modulator having these properties can be provided by one skilled in the art who has available today's assortment of logical circuit components such as operation amplifiers, shift registers, flip-flop circuits and AND/OR gates. The detail construction of the modulator is therefore not dealt with here.

In the described embodiments, each clock period $1/f_0$ is divided, apart from the extreme positions of the modulator, by the pulse width modulation into two intervals. During the first one, energy is transported between the load and battery sides according to one of the four operation modes described below. During the second one there is no energy transport. The task of the input and output filters is to equalize this pulsing (form the mean value thereof) so that the energy flow in load and battery is not notably at variance with the clock frequency $f_0$. In this mode the analogue signal which is desired to be amplified is regenerated from pulse width modulated intermediate form.

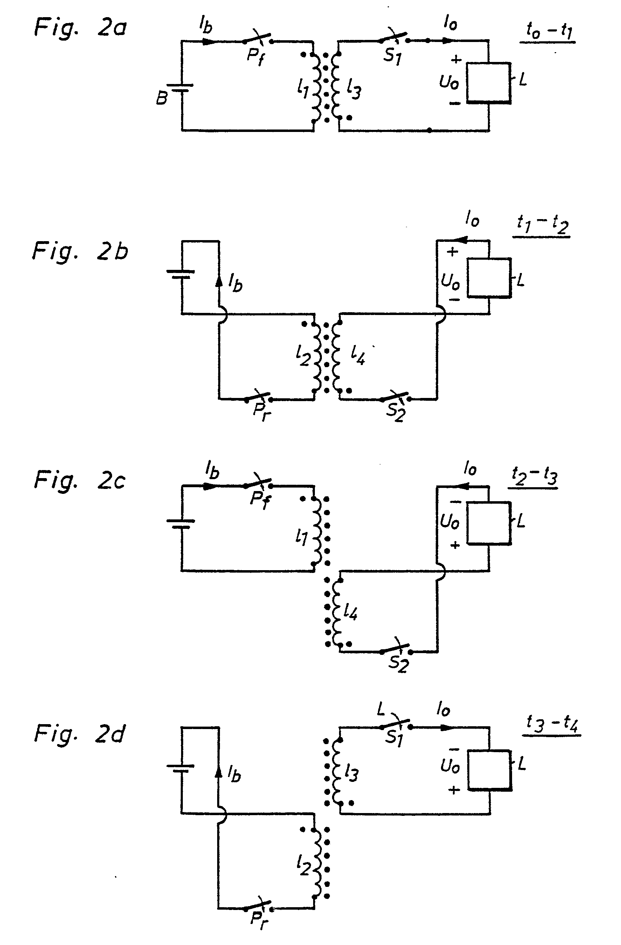

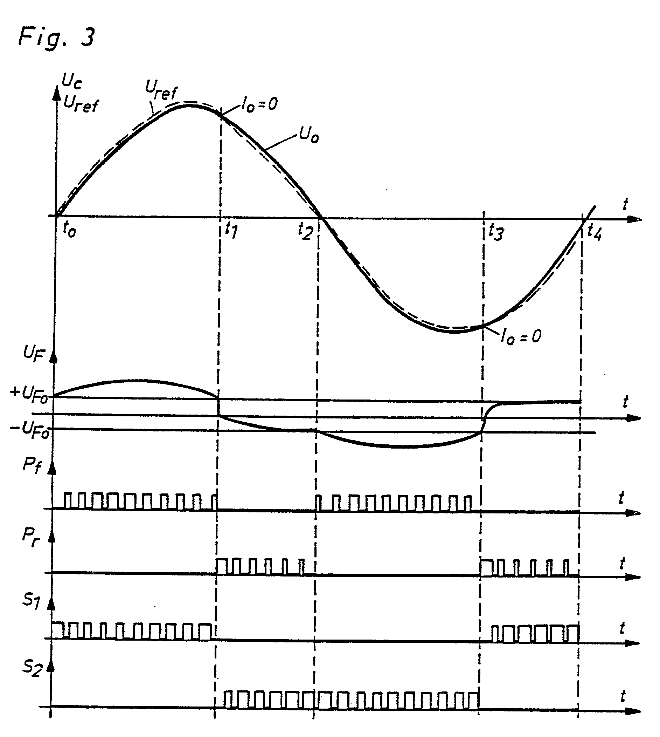

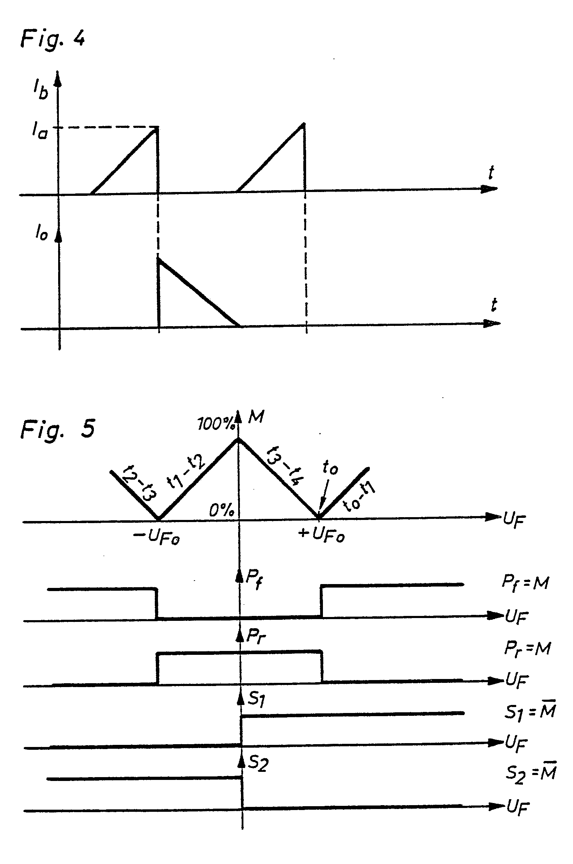

The function of the converter will now be described in greater detail while referring to Figs. 2a—2d, illustrating equivalence diagrams during the different switching sequences, and to Fig. 3 illustrating the time diagram of the output voltage $U_0$, the reference voltage $U_{ref}$, the error voltage $U_f$ and the control voltage pulses to the switches $P_f$, $P_r$ and $S_1$, $S_2$ respectively, for a given loading case, i.e. a given reactive load connected to the output filter UF. The pulse width modulator characteristic is illustrated in the diagram according to Fig. 5. This diagram illustrates the pulse rate M of the transmitted control pulses to the switches $P_f$, $P_r$ and $S_1$, $S_2$ as a function of the controlling error voltage. The modulator is constructed such that when the reference voltage $U_{ref} > U_c$ and both are positive, the error voltage $U_F > U_{Fo}$, (cf when $t = t_0$ in Fig. 5). When $U_{ref} > U_c$ and both are positive, then $-U_{Fo} < U_f < 0$, $(t_1 < t < t_2)$. When $U_{ref} < U_c > Y_o$, and both are negative, then $U_f < -U_{Fo}$, and when $U_{ref} > U_c$ and both are negative, then $0 < U_f < U_{Fo}$.

At the time $t_0$, the reference and load voltages are assumed equal to zero and thereby $U_F = 0$. During the short time when $U_{ref}$ grows from 0 to $U_{Fo}$, the necessary regulating deviation is established and the converter comes into the first operation mode which has a duration up to $t_1$. Depending on the load, the error signal $U_F$ rises above $U_{Fo}$, as in Fig. 3. Within the interval $t_0 - t_1$, a pulse length modulation of the pulses to the switches $P_f$ and $S_1$ occurs, while the switches $P_r$ and $S_2$ are interrupted (cf Fig. 5), and the equivalence diagram according to Fig. 2 is obtained. The switching sequence during the interval $t_0 - t_1$ is such that when $P_f$ is closed, $S_1$ is open and vice versa, the switches thus being driven in phase opposition.

At the time $t_1$, according to Fig. 3, the voltage $U_{ref}$ has sunk so that $U_{ref} = U_0$ and the error voltage $U_F$ will rapidly sink first to zero and thereafter to a negative value, when the reference voltage will continue to be less than the voltage $U_c$. The modulation characteristic for $0 < U_F < U_{Fo}$ according to Fig. 5 will therefore be rapidly run through and the pulse width modulation of the control pulses $P_r$ and $S_2$ which, according to Fig. 5, are now energized, will be executed.

At the time $t_2$, as in Fig. 3, the load voltage has sunk to zero. For this to be negative, the regulating deviation must be somewhat more negative so that the error voltage $U_F$ will be equal to $-U_{Fo}$ (corresponding to $+U_{Fo}$ at the zero pass $t = t_0$), and the third operation mode is initiated. During the interval $t_1 - t_2$, there is obtained the equivalence diagram according to Fig. 2b.

At the time $t_2$, both $U_c$ and $U_r$ become negative and the error voltage $U_F$ decreases towards a greater negative value, (cf the state after the time $t_0$). As in Fig. 5, the switches $P_f$ and $S_2$ will now be energized and be driven in phase opposition, while the switches $P_r$ and $S_1$ are not energized (they are interrupted). The equivalence diagram according to Fig. 2c is thus obtained.

At the time $t_3$, the voltage $U_r$ will become less negative than $U_c$ and the error voltage $U_F$ will be positive. This results in that $U_F$ increases rapidly from $-U_{Fo}$ to zero, after which the load voltage can be raised towards zero during the interval $t_3 - t_4$. During this interval, the switches $P_r$ and $S_1$ are energized and switched in counterphase, pulse width modulation taking place along the portion of the modulation characteristic according to Fig. 5 which lies between $0 < U_F < U_{Fo}$.

The process in the converter power section will now be described in detail with guidance from Figs. 2a—2d, which illustrate simplified diagrams over the power section, where the input filter has been excluded for the sake of simplicity, and the output filter is included in the block L. The battery voltage $U_B$ is a direct voltage, the load voltage $U_L$ varies in time with the reference voltage and the currents $I_b$ and $I_o$ which are ramp- (Fig. 4) or trapezoidally shaped pulses in time with the clock frequency $f_0$.

The interval $t_0 - t_1$ (Fig. 2a)

During this interval, the switches $P_f$ and $S_1$ are energized according to Fig. 3. When $P_f$ is closed, a current $I_b$ flows into the winding $I_1$ at the marking, which magnetizes the transformer so that a given magnetic energy is stored (see the diagram in Fig. 4), where the duration of the triangular pulse up the value $I_a$ corresponds to the closed time of the switch $P_f$. When the switch $P_f$ is opened, the switch $S_1$ closes and the energy stored in the transformer gives rise to a current $I_0$ to the winding $I_3$ (see Fig. 4). The current will flow to the output filter and give a charge to the capacitor in it. The sequence is repeated the next time the switch $P_f$ is conductive ($S_1$ is open) and when the switch $S_1$ is conductive ($P_f$ is open). A positive current is obtained which successively charges the output filter, there being a positive voltage across the filter during the whole of the time interval.

The interval $t_1$–$t_2$ (Fig. 2b)

During this interval the switches $P_r$, and $S_2$ are energized, while the switches $P_f$ and $S_1$ are not energized. Magnetizing the transformer is done with the current $I_o$ through the winding $I_4$ from the output filter when the switch $S_2$ is conductive ($P_r$ is open), and discharge of the energy stored in the transformer gives a current $I_b$ in the winding $I_2$ back again to the battery B when the switch $P_r$ is closed ($S_2$ is open). A negative current is obtained through the output filter (the load) and a positive voltage. The power direction will be reversed in relation to the previous case.

The interval $t_2$–$t_3$ (Fig. 2c)

During this interval the switches $P_f$ and $S_2$ are energized, while the switches $P_r$ and $S_1$ are not energized. The current $I_b$ from the battery B flows through the winding $I_1$ when the switch $P_f$ is closed ($S_2$ is open) and stores magnetic energy in the transformer, cf the state during the interval $t_o$–$t_1$. When the switch $P_f$ is open and $S_2$ is closed, a current $I_o$ will flow, although with a direction opposite to the one according to Fig. 1a, depending on the orientation of the winding $I_4$. During the interval $t_1$–$t_3$ there is thus obtained a negative voltage $U_o$ and a negative current $I_o$.

The interval $t_3$–$t_4$ (Fig. 2d)

During this interval the switches $P_r$ and $S_1$ are energized, while the switches $P_f$ and $S_2$ are not. The magnetization of the transformer is done with the current $I_o$ through the winding $I_3$ from the load side when the switch $S_1$ is conductive ($P_r$ is open) and discharge of the energy stored in the transformer is by the current $I_b$ to the battery B when the switch $P_r$ is closed ($S_1$ is open). A positive current and a negative voltage are obtained over the load L and energy transfer thus takes place from load to battery side.

The time diagram according to Fig. 3 applies, as mentioned above, for a given loading case. In the idling case, the times $t_1$ and $t_3$ are situated in the middle of the intervals $t_o$–$t_2$ and $t_2$–$t_4$, respectively, and are displaced towards $t_2$ and $t_4$ for increasing reactive load. Furthermore, the case is shown where the switches $P_f$, $S_1$ and $P_r$, $S_2$ are driven in phase opposition, resulting in a so-called fly-back converter being obtained. It is also possible to drive the switches $P_f$, $S_1$ and $P_r$, $S_2$ in phase instead, the converter then forming a forward converter. This type of converter has the same appearance in respect of the power stage as is shown in Fig. 1 with the exception that the orientation of the transformer windings $I_1$–$I_4$ will be reversed.

The converter output filter UF shall demodulate the pulse width modulated output signal by attenuating tones at the switching frequency and higher. In the fly-back converter, the filter UF is suitably a capacitor connected over the output terminals or by a pi-link with low input impedance for the switching frequency. In the forward converter case (in-phase switching) the filter UF is suitably an LC-link forming a low pass filter with low input impedance for the switching frequency.

## Claims

1. Pulse width modulated converter for converting an input a direct voltage (B) to a low-frequency and preferably sinusoidal alternating output voltage, ($U_o$) whose amplitude is not limited by said direct voltage level (B) including a pair of input terminals connected to the direct voltage (B), a pair of output terminals connected to a load (L), and a transformer (T) with a pair of primary windings ($I_1$, $I_2$) connected in series and a pair of secondary windings ($I_3$, $I_4$) connected in series, the end points of said pairs of windings being opposite end points in each case, a first and a second controllable switch ($P_f$, $P_r$) each connected between such opposite end points of the primary windings and an input terminal, a third and fourth controllable switch ($S_1$, $S_2$) each conected between opposite end points of the secondary windings and an output terminal, in which converter a pulse width modulator (PM) in response to an error signal ($U_F$) derived from the output voltage ($U_L$) of the converter and a reference voltage ($U_{ref}$) corresponding to the desired alternating voltage, is arranged for controlling the switches ($P_f$, $P_r$, $S_1$, $S_2$) according to the following: during a first time interval ($t_o$–$t_1$) the first ($P_f$) and the third ($S_1$) switches are controlled by control pulses of constant frequency ($f_o$) higher than the frequency of the output voltage to an alternatingly conductive and blocked state with a variable pulse rate in response to the magnitude of said error signal ($U_F$), during a second time interval ($t_1$–$t_2$) the second ($P_r$) and the fourth ($S_2$) switches are controlled by said control pulses of constant frequency and variable pulse rate, thus establishing the positive half-wave of the load voltage ($U_o$), that during a third time interval ($t_2$–$t_3$) said first ($P_f$) and fourth ($S_2$) switches are controlled by said control pulses of constant frequency and with variable pulse rate, and during a fourth time interval ($t_3$–$t_4$) said second ($P_r$) switches are controlled by said control pulses of constant frequency and variable pulse rate, thus establishing the negative half-wave of the load voltage ($U_o$), and such that flow-back of energy to the voltage source (B) during said second and fourth time intervals ($t_1$–$t_2$, $t_3$–$t_4$) is carried out.

2. Pulse width modulated converter according to claim 1, characterized in that during each of said time intervals ($t_1$–$t_2$, etc) both switches ($P_f$, $S_1$ etc) are controlled in phase opposition, i.e. the one conducts when the other is blocked, and vice versa.

3. Pulse width modulated converter according to claim 1, characterized in that during each of said time intervals ($t_1$–$t_2$, etc), both switches ($P_f$, $S_1$ etc) are controlled in phase, i.e. both conduct or are blocked simultaneously.

## Patentansprüche

1. Impulsbreiten modulierter Konverter zur Konvertierung einer Eingangsgleichspannung (B) in eine niederfrequente und vorzugsweise sinusförmige Wechselausgangsspannung ($U_o$), deren Amplitude nicht durch den Gleichspannungspegel (B) begrenzt ist mit eine Paar von Eingangsanschlüssen, die mit der Gleichspannung (B) verbunden sind, mit einem Paar von Ausgangsanschlüssen, die mit einer Last (L) verbunden sind, und mit einem Wandler oder Transformator (T) mit einem Paar von Primärwindungen ($I_1$, $I_2$), die in Reihe geschaltet sind, und mit einem Paar von Sekundärwindungen ($I_3$, $I_4$), die ebenfalls in Serie angeordnet, sind, wobei die Endpunkte dieser Windungspaare in jedem Falle entgegengesetzte Endpunkte sind, mit einem ersten und zweiten steuerbaren Schalter ($P_f$, $P_r$), von denen jeder zwischen solchen entgegengesetzten Endpunkten der Primärwindungen und einem Eingangsanschluß angeordnet ist, mit einem dritten und vierten steuerbaren Schalter ($S_1$, $S_2$), von denen jeder zwischen den entgegengesetzten Endpunkten der Sekundärwindungen und einem Ausgangsanschluß angeordnet ist, in welchem Konverter ein Impulsbreiten-Modulator (PM) auf ein Fehlersignal ($U_F$) hin, welches von der Ausgangsspannung ($U_L$) des Konverters abgeleitet wird, sowie auf eine Referenzspannung ($U_{ref}$) hin, die der gewünschten Wechselspannung entspricht, vorgesehen, um die Schalter ($P_f$, $P_r$, $S_1$, $S_2$) wie folgt zu steuern: Während eines ersten Zeitintervalles ($t_0$–$t_1$) werden der erste ($P_f$) und der dritte ($S_1$) Schalter durch Steuerimpulse von Konstanter Frequenz ($f_0$) gesteuert, die höher ist als die Frequenz der Ausgangsspannung, in einen abwechselnd leitenden und gesperrten Zustand mit einer veränderlichen Impulsrate in Abhängigkeit von der Größe des Fehlersignales ($U_F$); während eines zweiten Zeitintervalles ($t_1$–$t_2$) werden der zweite ($P_r$) und der vierte ($S_2$) Schalter durch die Steuerimpulse der konstanten Frequenz und veränderlichen Impulsrate gesteuert, wobei sie die positive Halbwelle der Lastspannung ($U_0$) hervorbringen; während eines dritten Zeitintervalles ($t_2$–$t_3$) werden der erste ($P_f$) und der vierte ($S_2$) Schalter durch diese Steuerimpulse von konstanter Frequenz und mit variabler Impulsrate gesteuert; und während eines vierten Zeitintervalles ($t_3$–$t_4$) werden die zweiten ($P_r$) Schalter

durch diese Steuerimpulse von konstanter Frequenz und variabler Impulsrate gesteuert, und somit die negative Halbwelle der Lastspannung ($U_0$) hervorbringen, und daß der Rückfluß der Energie zur Spannungsquelle (B) während des zweiten und vierten Zeitintervalles ($t_1$–$t_2$; $t_3$–$t_4$) durchgeführt wird.

2. Impulsbreiten modulierter Konverter nach Anspruch 1, dadurch gekennzeichnet, daß während jedes der Zeitintervalle ($t_1$–$t_2$, usw.) beide Schalter ($P_f$, $S_1$, usw.) in entgegengesetzter Phase gesteuert werden, was bedeutet, daß einer leiter, wenn der andere gesperrt ist und umgekehrt.

3. Impulsbreiten modulierter Konverter nach Anspruch 1, dadurch gekennzeichnet, daß während jeder der Zeitintervalle ($t_1$–$t_2$, usw.) beide Schalter ($P_f$, $S_1$, usw.) in Phase gesteuert werden, was bedeutet, daß beide gleichzeitig leiten oder gleichzeitig gesperrt sind.

## Revendications

1. Convertisseur à modulation d'impulsions en largeur destiné à convertir une tension continue d'entrée (B) en une tension alternative de sortie de basse fréquence et de préférence sinusoïdale ($U_o$), dont l'amplitude n'est pas limitée par le niveau de tension continue (B), comprenant une paire de bornes d'entrée connectées de façon à recevoir la tension continue (B), une paire de bornes de sortie connectées à une charge (L) et un transformateur (T) ayant une paire d'enroulements primaires ($I_1$, $I_2$) connectés en série et une paire d'enroulements secondaires ($I_3$, $I_4$) connectés en série, les points d'extrémité de ces paires d'enroulements étant dans chaque cas des points d'extrémité opposés des enroulements primaires et une commandés ($P_f$, $P_r$), chacun d'eux étant connecté entre de tels points d'extrémité opoosés des enroulements primaires et une borne d'entrée, des troisiéme et quatrième interrupteurs commandés ($S_1$, $S_2$), chacun d'eux étant connecté entre des points d'extrémité opposés des enroulements secondaires et une borne de sortie, ce convertisseur comprenant un modulateur d'impulsions en largeur (PM) qui, sous l'effet d'un signal d'erreur ($U_F$) élaboré à partir de la tension de sortie ($U_L$) du convertisseur et d'une tension de référence ($U_{ref}$) correspondant à la tension alternative désirée, commande les interrupteurs ($P_f$, $P_r$, $S_1$, $S_2$) de la manière suivante: pendant un premier intervalle de temps ($t_0$–$t_1$), les premier ($P_f$) et troisième ($S_1$) interrupteurs sont commandés par des impulsions de commande de fréquence constante ($f_0$) supérieure à la fréquence de la tension de sortie, de façon à passer alternativement dans un état conducteur et un état bloqué, avec une cadence d'impulsions variable sous la dépendance de la valeur du signal d'erreur ($U_F$), pendant un second intervalle de temps ($t_1$–$t_2$), les second ($P_r$) et quatrième ($S_2$) interrupteurs

sont commandés par lesdites impulsions de commande de fréquence constante et de cadence d'impulsions variable, ce qui établit l'alternance positive de la tension de charge $(U_o)$, pendant un troisième intervalle de temps $(t_2 - t_3)$, les premier $(P_f)$ et quatrième $(S_2)$ interrupteurs sont commandés par les impulsions de commande de fréquence constante et de cadence d'impulsions variable, et pendant un quatrième intervalle de temps $(t_3 - t_4)$, les seconds interrupteurs $(P_r)$ sont commandés par les impulsions de commande de fréquence constante et de cadence d'impulsions variable, ce qui établit l'alternance négative de la tension de charge $(U_o)$, d'une manière produisant un retour d'énergie vers la source de tension (B) pendant les second et quatrième intervalles de temps $(t_1 - t_2, t_3 - t_4)$.

2. Convertisseur à modulation d'impulsions en largeur selon la revendication 1, caractérisé en ce que pendant chacun des intervalles de temps $(t_1 - t_2,$ etc), les deux interrupteurs $(P_f, S_1,$ etc) sont commandés en opposition de phase, c'est-à-dire que l'un conduit pendant que l'autre est bloqué et inversement.

3. Convertisseur à modulation d'impulsions en largeur selon la revendication 1, caractérisé en ce que pendant chacun des intervalles de temps $(t_1 - t_2,$ etc), les deux interrupteurs $(P_f, S_1,$ etc) sont commandés en phase, c'est-à-dire que les deux conduisent ou sont bloqués simultanément.

Fig. 1

0 066 577

Fig. 2a  $t_o - t_1$

Fig. 2b  $t_1 - t_2$

Fig. 2c  $t_2 - t_3$

Fig. 2d  $t_3 - t_4$

2

Fig. 3

*Fig. 4*

*Fig. 5*